Europäisches Patentamt

European Patent Office

Office européen des brevets

(19)

(11) Publication number:

# 0 145 487
# B1

## (12) EUROPEAN PATENT SPECIFICATION

(45) Date of publication of patent specification: 08.06.88

(51) Int. Cl.⁴: **B 60 B 7/00**

(21) Application number: 84308627.3

(22) Date of filing: 12.12.84

(54) Apparatus for covering a disc wheel for motor vehicle.

(30) Priority: 14.12.83 JP 192793/83
22.10.84 JP 159897/84

(43) Date of publication of application:
19.06.85 Bulletin 85/25

(45) Publication of the grant of the patent:
08.06.88 Bulletin 88/23

(84) Designated Contracting States:
DE FR GB IT

(56) References cited:
DE-A-2 947 682
FR-A- 980 935
US-A-2 654 354
US-A-2 751 154
US-A-2 857 023
US-A-3 874 347

PATENTS ABSTRACTS OF JAPAN, vol. 9, no.
11 (M-351)1734r, 18th January 1985

(73) Proprietor: KABUSHIKI KAISHA TOKAI RIKA
DENKI SEISAKUSHO
1, Aza Noda Oaza Toyota Oguchi-cho
Niwa-gun Aichi-ken (JP)

(72) Inventor: Baba, Takeshi
3-6, Iwanaridai 8 chome
Kasugai Aichi (JP)
Inventor: Iwasa, Hiroki
34-1, Nagakute Higashiharayama
Nagakutecho Aichi (JP)
Inventor: Ohmi, Kyozo
86, Gohigashi Shindencho
Anjyo Aichi (JP)

(74) Representative: Haggart, John Pawson et al
Page, White & Farrer 5 Plough Place New Fetter
Lane
London EC4A 1HY (GB)

EP 0 145 487 B1

## Description

The present invention relates to an apparatus for covering a disc wheel for use in a motor vehicle, and more particularly to a wheel cover mounted on the disc wheel, which is placed on the outermost side of a wheel of the motor vehicle.

The disc wheel of a motor vehicle such as an automobile is disposed adjacent a brake device and thus receives heat through heat transfer which occurs in a disc rotor or brake drum of the brake device while braking. The conventional disc wheel, therefore, is constructed so as to discharge that heat to the atmosphere. However, recently, the wheel cover mounted on the disc wheel has been made of plastics, which have a low heat transfer characteristic. Therefore, according to a known apparatus (DE-A-2947682), the wheel cover is provided with ventilation openings through which heat is to be discharged to the atmosphere.

Since the wheel cover is mounted on the outermost side of the wheel of the vehicle, the openings in the wheel cover cause a considerable air resistance to the vehicle when travelling, especially at high speed. Further, when the vehicle is travelling at high speed, especially on a motorway, the discharge of heat from the wheel cover is not as necessary as on a regular busy road, since the braking is not as frequent on the motorway.

An object of the present invention is to provide a unique apparatus for covering a disc wheel for a motor vehicle, in which openings for ventilation of a wheel cover are opened only when the temperature inside the wheel cover is so high that heat inside the cover will be discharged to the atmosphere, and are closed when the temperature inside the wheel cover is low, so that air resistance to the vehicle in motion is kept low.

According to the invention there is provided apparatus for covering the disc wheel supporting a tyre for a motor vehicle having a wheel cover mounted on the disc wheel and covering an outer side of said disc wheel and at least one ventilation opening in the wheel cover for providing communication of the inside of the wheel cover with the atmosphere, characterised in that the ventilation opening is provided with means for closing the ventilation opening when the temperature inside the wheel cover is not more than a predetermined temperature and for opening the ventilation opening when the temperature inside the wheel cover is more than said predetermined temperature.

The means for closing and opening the ventilation opening may include a closing plate for closing the ventilation opening, and a heat sensing means or member connected to the closing plate for deformation when the temperature inside the wheel cover is more than said predetermined temperature so as to displace the closing plate away from the ventilation opening and thereby open the ventilation opening.

The heat sensing member may be made of a shape memory effect alloy.

Some embodiments of the invention will now be described, by way of example, with reference to the accompanying drawings in which:-

Figure 1 is a front view of a vehicle wheel incorporating a first embodiment of an apparatus for covering a disc wheel according to the present invention,

Figure 2 is a cross-sectional view taken along line II-II of Figure 1,

Figure 3 is a perspective view of a wheel cover of a second embodiment of the invention,

Figure 4 is a perspective view of a wheel cover of a third embodiment of the invention,

Figure 5 is a front view of a wheel cover of a fourth embodiment of the invention,

Figure 6 is an enlarged front view of a ventilation opening of Figure 5 when closed,

Figure 7 is a cross-sectional view taken along line VII-VII of Figure 6,

Figure 8 is a cross-sectional view taken along line VIII-VIII of Figure 6,

Figure 9 is an enlarged front view of the ventilation opening when opened,

Figure 10 is a front view of a wheel cover of a fifth embodiment of the invention,

Figure 11 is an enlarged partial bottom view of the wheel cover of Figure 10 showing a portion of a ventilation opening,

Figure 12 is a cross-sectional view taken along line XII-XII of Figure 11,

Figure 13 is a cross-sectional view taken along line XIII-XIII of Figure 11,

Figure 14 is a cross-sectional view similar to Figure 13 showing a condition where the ventilation opening is opened,

Figure 15 is a front view of a wheel cover of a sixth embodiment of the invention,

Figure 16 is an enlarged partial bottom view of the wheel cover of Figure 15,

Figure 17 is an enlarged cross-sectional view showing a closing plate of the embodiment of Figures 15 and 16,

Figure 18 is a partially cut-away perspective view showing a condition where the closing plate of Figure 17 closes the ventilation opening,

Figure 19 is a partially cut-away perspective view similar to Figure 18 showing a condition where the ventilation opening is opened,

Figure 20 is a front view of a wheel cover of a seventh embodiment of the invention,

Figure 21 is a perspective view showing the bottom side of the wheel cover of Figure 20,

Figure 22 is a cross-sectional view showing a closing plate when closing the ventilation opening in the wheel cover of Figures 20 and 21,

Figure 23 is a partially cut-away perspective view showing a condition where the ventilation opening of Figure 22 is closed,

Figure 24 is a cross-sectional view showing a closing plate of the wheel cover of Figures 20 to 23 when the ventilation opening is open, and

Figure 25 is a partially cut-away perspective view showing the ventilation opening open in the embodiment of Figures 20 to 24.

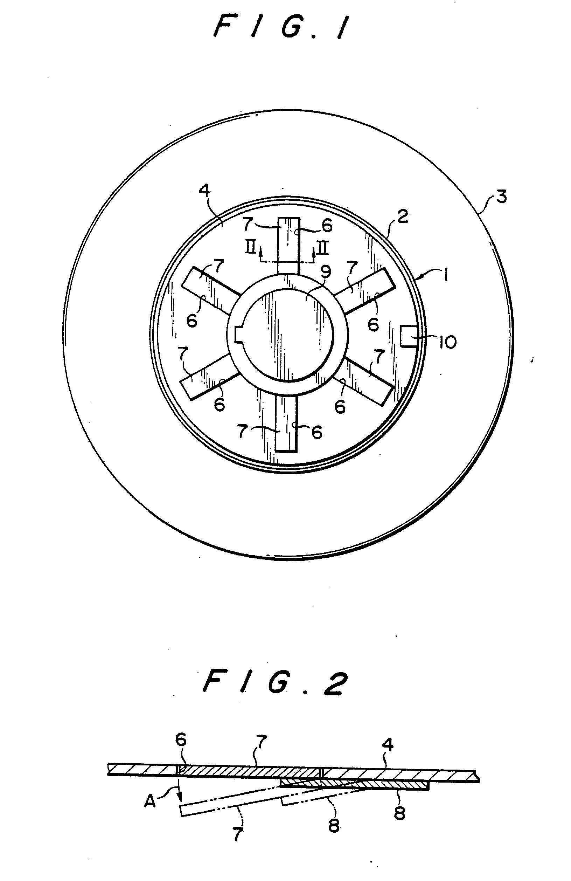

Referring first to Figures 1 and 2, which shows a first embodiment of the invention, being a front view of a wheel of the vehicle. A disc wheel 1 has a rim 2, and a tyre 3 is mounted on the outer periphery of the rim 2. The disc wheel 1 is, though not shown, fixed onto a wheel axis by bolts and placed adjacent a brake device. A wheel cover 4 for covering the disc wheel 1 is mounted on the outermost side of the disc wheel 1 by means of its peripheral portions (not shown) which are inserted with force into the inner periphery of the rim 2. The wheel cover may be made of, for example, synthetic resin. The wheel cover has a plurality of ventilation openings 6 extending in a radial direction and having a substantially rectangular shape. The openings 6 may be six in number as shown in Figure 1. A closing plate 7 for opening and closing the openings 6 is provided at each of the openings 6. The plate 7 also has a rectangular shape so as to be snugly disposed into the openings 6, so that each opening 6 can be closed by one of the plates 7 as shown in Figure 2. Each plate 7 is supported by a heat sensing member 8 which deforms in response to a change of temperature around or inside the wheel cover. The heat sensing member 8 may be made of a shape memory effect alloy, which not only deforms at a predetermined high temperature phase but also returns to its original shape at a low temperature phase. The heat sensing member 8 may alternatively be a bimetallic device. One end portion of the heat sensing member 8 is fixed on the bottom surface of the plate 7 and the other end portion thereof is fixed on the bottom surface of the wheel cover 4, so that when the temperature is lower than a predetermined temperature, the heat sensing member 8 keeps flat so as to close the opening 6 by means of the plate 7 as shown by solid lines in Figure 2, and when the temperature is higher than the predetermined temperature, the heat sensing member 8 deforms into a substantially bow shape so as to move the plate 7 inwardly of the wheel cover, as shown by phantom lines in Figure 2, in a direction A and thus open the opening 6.

A lid 9 is detachably mounted on the centre of the wheel cover 4, and bolts (not shown) of the disc wheel 1 are accessible when the lid 5 is removed. The wheel cover 4 has another lid 10 mounted for covering an opening for access to an air valve (not shown) of the tyre 3.

In operation, when a motor vehicle provided with wheel covers with the above-described construction is running on a motorway, the brakes are not often used, and thus there is not much friction heat due to braking. Therefore, the disc wheel 1 as well as the wheel cover 4 runs at low temperature and each heat sensing member 8 remains flat so as to close the openings 6 by the closing plates 7 as shown in Figure 2. As a result, the air resistance at the surface of the wheel covers is low while the vehicle runs at a high speed on a motorway, so that aerodynamic characteristic of the vehicle is maintained.

In a busy traffic however, such as in a city, frictional heat is generated by frequent operation of the brakes, which causes the temperature of the wheel cover to rise above a predetermined temperature. As a result, the heat sensing member 8 deforms into a bowed shape so as to open the openings 6 as shown in Figure 2. The heat inside the wheel cover 4 can then be discharged to the atmosphere through the openings 6, whereby the disc wheel 1 is cooled and the temperature of the brake device is kept low. When the temperature of the cover falls below the predetermined temperature, the heat sensing members 8 flatten so as to close the openings 6.

Accordingly, the openings 6 are opened only when the heat within the wheel cover has to be discharged, and are otherwise closed so as not to impair the aerodynamic characteristics of the vehicle.

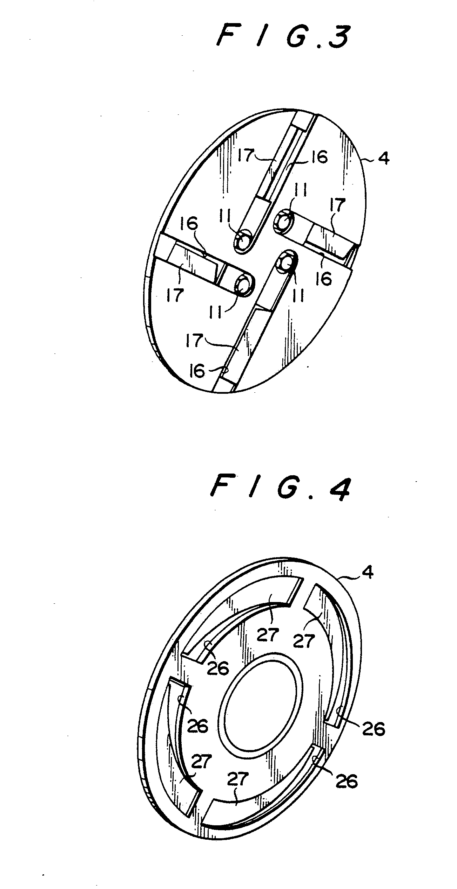

Figure 3 shows a second embodiment of the invention in which the placement of the ventilation opening is different from that of the first embodiment. Disposed around the centre of the wheel cover 4 are four nuts 11 which serve an aesthetic purpose. The wheel cover 4 has four ventilation openings 16 which extend from the nuts 11 to the outer periphery of the wheel cover 4 substantially radially but each at an angle to a radius. Each of the openings 16 is provided with a closing plate 17 in the same manner as in the embodiment of Figures 1 and 2, so that the deformation of the heat sensing member (not shown) causes the opening to be closed or opened by the closing plate 17.

Figure 4 illustrates a third embodiment of the invention, which, like the second embodiment, differs from the first embodiment only in the placing of the ventilation openings. The wheel cover 4 has four ventilation openings 26 at equal intervals extending circumferentially about the central axis of the wheel cover 4. Each of the openings 26 is provided with a closing plate 27 in the same manner as in the embodiment of Figures 1 and 2, so that the deformation of the heat sensing member (not shown) causes the opening to be closed or opened by the closing plate 27.

In the above embodiments, the closing plate may be made of the heat sensing material so that the closing plate can close or open the ventilation opening by itself in accordance with the change of the temperature.

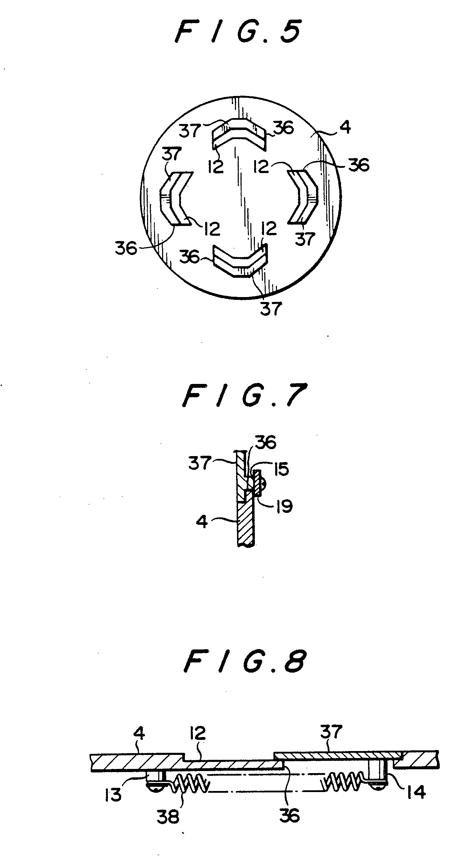

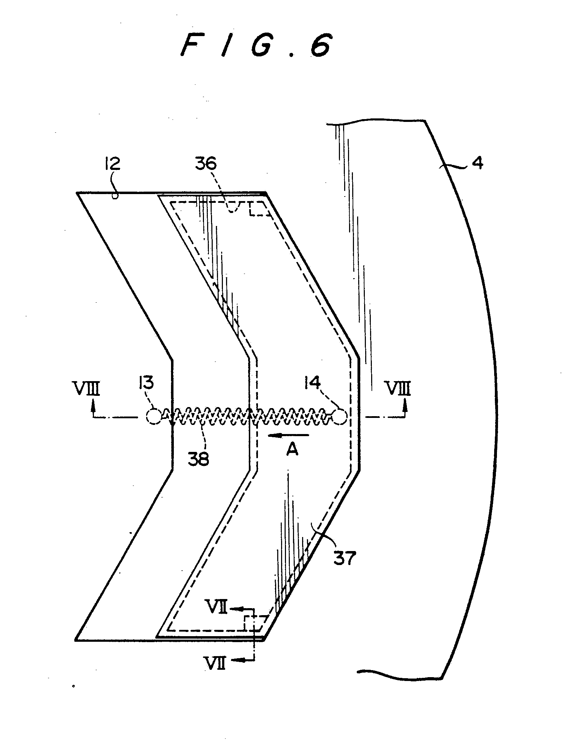

Figures 5 to 9 shows a fourth embodiment of the invention. As shown in Figure 5, the wheel cover 4 has four recesses 12 which extend at equal intervals in a substantially circumferential direction about the central axis of the wheel cover. Each of the recesses 12 is formed into an angular shape when viewed in front elevation. A ventilation opening 36 is formed within each of the recesses 12 and occupies substantially half of the area of the recess. The ventilation opening 36 also has an angular shape. A closing plate 37 having a corresponding angular shape is slidably coupled into each of the recesses 12, so that the closing plate 37 opens or closes the opening 36 by its sliding movement. In order to guide the sliding movement of the closing plate 37, a support plate 19 is mounted on the bottom of the closing plate 37 by a projection 15 as shown in Figures 6 and 7, so as to slidably hold the outer peripheral edge of the opening 36 between the support plate 19 and the body of the closing plate 37.

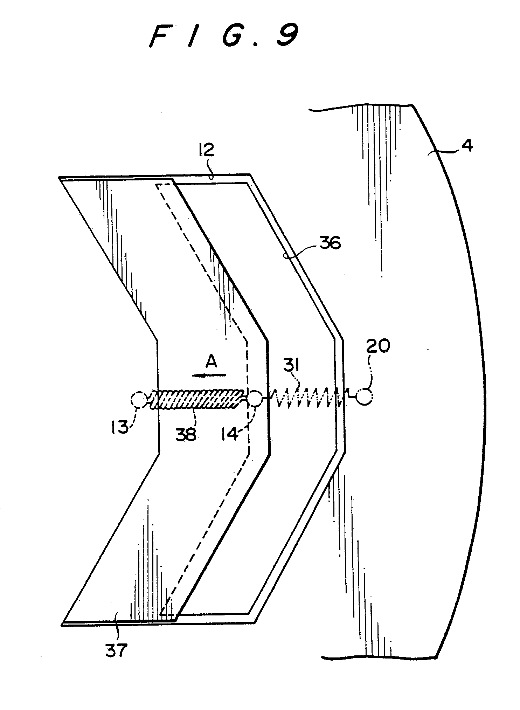

As shown in Figures 6 and 8, the wheel cover has a projection piece 13 projecting from the bottom thereof and a counterpart projection piece 14 projects from the bottom of the closing plate 37. A heat sensing member 38 is interposed between the two projection pieces 13 and 14. The heat sensing member 38, which is formed into a coil in this embodiment may be made of a shape memory effect alloy which is capable of memorizing two different shapes corresponding to a low temperature phase and a high temperature phase. More specifically, the heat sensing member 38 has an elongated shape as shown in Figures 6 and 8 at a low temperature phase, and has a shortened shape as shown in Figure 9 at a high temperature phase.

In operation, when the temperature of the wheel cover 4 is below a predetermined value as on a motorway, the heat sensing member 38 has the elongated shape so that the closing plate 37 is placed over and closes the opening 36 as shown in Figures 6 and 8. When the temperature of the wheel cover 4 becomes higher than the predetermined value due to the operation of the brakes and the like, the heat sensing member 38 takes the shortened shape so that the closing plate 37 slides toward the recess 12 as shown by arrow A in Figure 9 so as to open the opening 36.

As an alternative the heat sensing member 38 may be capable of memorizing only one shape, for example the shortened shape at the high temperature phase. In this case, as shown in Figure 9 by phantom lines, a coil spring 31 is necessarily interposed between the projection 14 on the plate 37 and another projection 20 on the wheel cover at the opposite side of the opening 36 from the projection 13. Accordingly, at the low temperature phase,the coil spring 31 pulls the closing plate 37 against a small resistance by the heat sensing member 38 to close the opening 36, and at the high temperature phase, the heat sensing member 38 pulls the closing plate 37 against the resilient force of the coil spring 31 to open the opening 36.

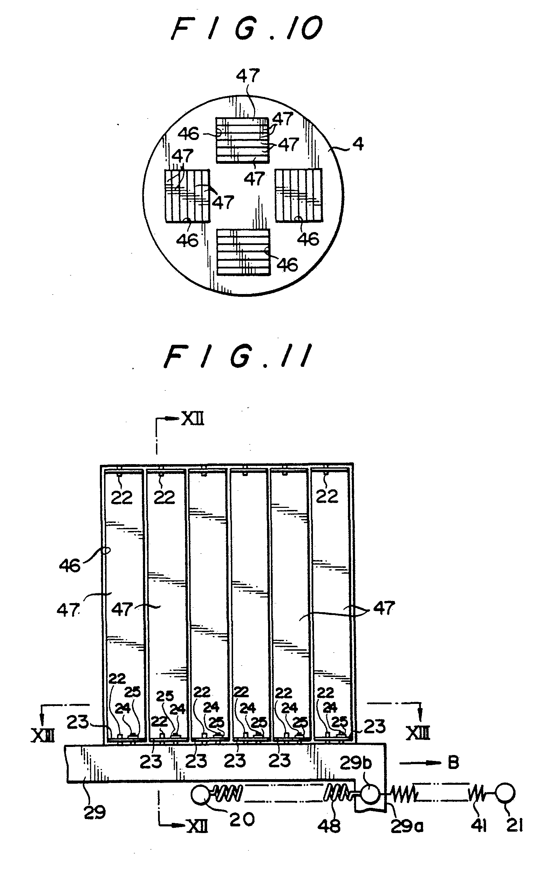

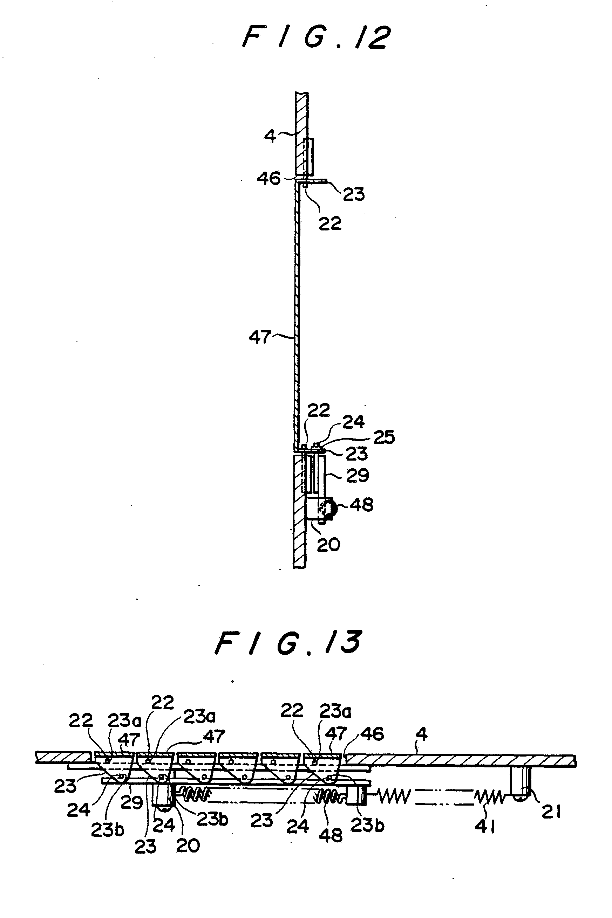

Figures 10 to 14 show a fifth embodiment of the invention. The wheel cover 4 has four rectangular ventilation openings 46 and each of the openings is provided with a plurality of closing plates 47, for example six, as shown in Figure 10. As shown in Figures 11 to 14, each of the closing plates 47 has a pair of side plates 23 integrally extending inwardly from both ends of each closing plate 47. Each of the side plates 23 has a hole 23a into which a pin 22 projecting from the peripheral side surface of the opening 46 is inserted, so that each of the closing plates 47 is rotatably supported by the pins 22. Therefore, six of the pins in total are provided on each of the opposed sides of the opening 46.

A link member 29 extends adjacent one of the opposed sides of the opening 46 and has a plurality of second pins 24 corresponding to the number of the closing plates 47, for example six in this embodiment. The second pin 24 projects toward the opening 46 and is inserted through a second hole 23b of the side plate 23 of the closing plate 47. A stopper ring 25 prevents the second pin 24 from falling out of the second hole 23b. The link member 29 has an integral arm 29a extending downwardly in Figure 11, on which a projection piece 29b is fixed. A pair of projection pieces 20 and 21 are fixed on the inner surface of the wheel cover 4 in such a manner that the projection piece 29b on the link member 29 is disposed between the projection pieces 20 and 21 on the wheel cover 4. A heat sensing member 48 is interposed between one of the projection pieces 20 and the projection piece 29b, and a tension coil spring 41 is interposed between the projection piece 29b and the other projection piece 21. The heat sensing member 48 is made of a shape memory effect alloy in a coil shape, which is capable of memorizing one shape at a predetermined high temperature phase. The coil spring 41 is, therefore, provided to bring the heat sensing member 48 back to the original shape at a lower temperature. Alternatively, the shape memory effect alloy may be one which is capable of memorizing two shapes corresponding to high and low temperature phases, and the coil spring is then unnecessary.

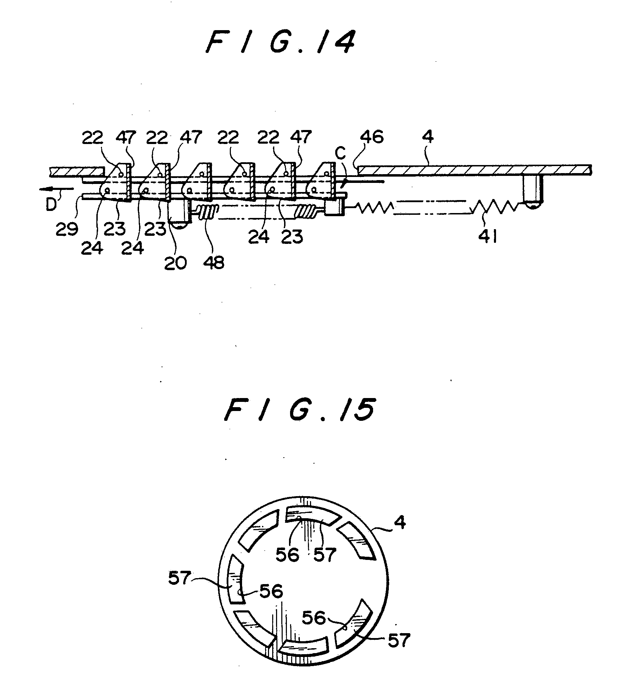

In operation, when the wheel cover 4 is at a low temperature, the coil spring 41 pulls the link member 29 in the direction shown by the arrow B in Figure 11, so that the closing plates 47 are rotated about the pins 22 in a counter-clockwise direction, as viewed in Figure 13, and close the opening 46. When the wheel cover 4 is at a high temperature, the sensing member 48 takes the shortened memorized shape and pulls the link member 29 in the direction shown by arrow D in Figure 14 opposite to arrow B in Figure 11, so that the closing plates are rotated in a clockwise direction C and open the opening 46.

Figures 15 to 19 show a sixth embodiment of the invention. The wheel cover 4 has a plurality of circumferential ventilation openings 56 which are close to the outer periphery of the wheel cover 4. As shown in Figure 16, which is a bottom view of the wheel cover of this embodiment, a disc frame 32 is rotatably mounted on the bottom surface of the wheel cover 4 by a pin 35. The disc frame 32 is provided with a plurality of integral projections 45 projecting outwardly in a radial direction toward the openings 56. A rod 43 also extends outwardly in a radial direction and is fixed on each of the projections 45. The disc frame 32 has a guide hole 40 extending in a circumferential direction, through which a guide screw 42 is loosely inserted and screwed into the wheel cover, so that the rotational movement of the disc frame 32 is securely guided by the hole 40 and the screw 42.

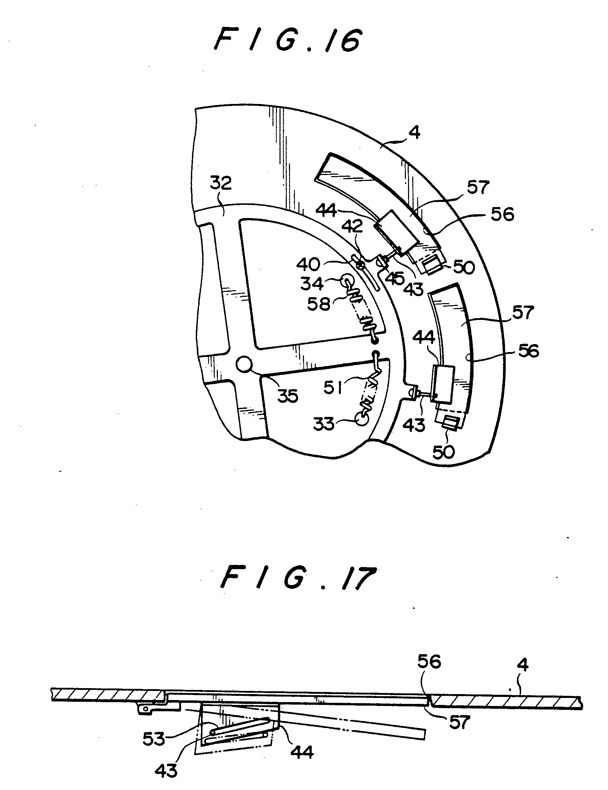

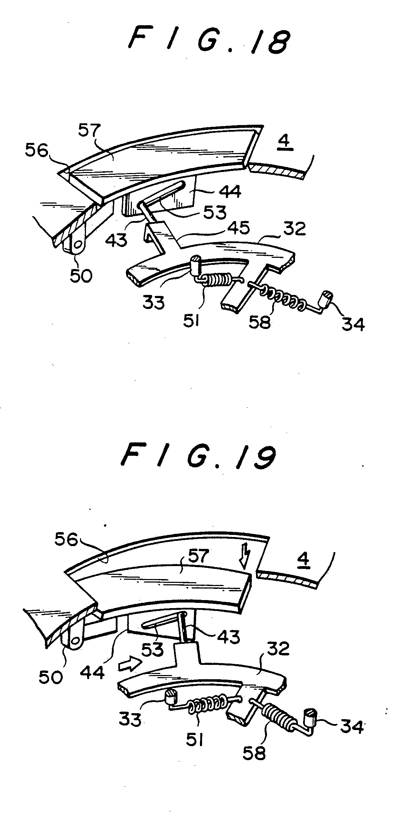

Each of the openings 56 is provided with a closing plate 57, which is pivoted on the bottom surface of the wheel cover 4 by a hinge 50. The closing plate 57 has a cam plate 44 on the bottom surface thereof and facing toward the centre of the disc frame 32. The cam plate 44 has a cam hole 53 extending diagonally with respect to the face of the closing plate 57, through which a rod 43 from the disc frame 32 is inserted. The positional relationship between the rod 43 and the cam hole 53 is such that when the rod 43 is at the lowermost end of the cam hole 53 as shown in Figures 17 and 18, the closing plate 57 is horizontal so as to close the opening 56, and when the rod 43 is at the uppermost end of the cam hole 53 as shown in Figures 17 and 19, the closing plate 57 is swung about the hinge 50 so as to open the opening 56. It should be noted that the rod 43 is moved in parallel with the face of the wheel cover 4 by the rotational movement of the disc frame 32.

As shown in Figure 6, a coil spring 51 is interposed between the disc frame 32 and the bottom surface of the wheel cover 4 and extends in one rotational or circumferential direction of the disc frame 32. A heat sensing member 58 of coil shape, as used in the aforementioned embodiments, is interposed between the disc frame 32 and the bottom surface of the wheel cover 4 and extends in the other rotational or circumferential direction of the disc frame 32. projections 33 and 34 project from the bottom surface of the wheel cover 4. The heat sensing member 58 takes a shortened shape at a high temperature phase so as to rotate the disc frame and thus the rod 43 into the uppermost end of the cam hole 53 as shown in Figure 19 and looses the shortened shape at a low temperature phase so that the coil spring 51 rotates the disc frame 32 and the rod 43 into the lowermost end of the cam hole 53 as shown in Figure 18.

In operation, when the temperature inside the wheel cover 4 is at the low temperature phase, the coil spring 51 pulls and rotates the disc frame 32 so as to place the rod 43 at the lowermost end of the cam hole 53, the left-hand end thereof as shown in Figure 17 by a solid line and in Figure 18, so that the closing plate 57 closes the opening 56.

When the temperature inside the wheel cover 4 rises to the high temperature phase above a predetermined value, the heat sensing member 58 takes the memorized shortened shape in order to pull and rotate the disc frame 32 in the opposite direction, overcoming a resilient force of the coil spring 51. As a result, the rod 43 is moved into the uppermost end of the cam hole 53, the right-hand end thereof as shown in Figure 17 by a phantom line and in Figure 19, so that the closing plate 57 pivots about the hinge 50 to open the opening 56.

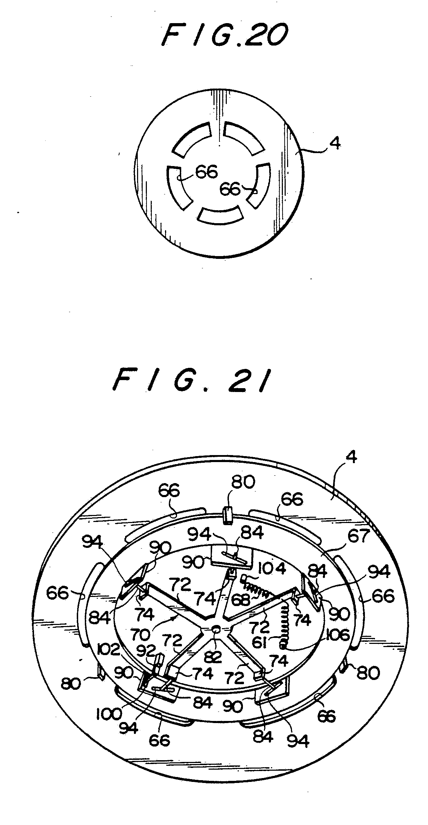

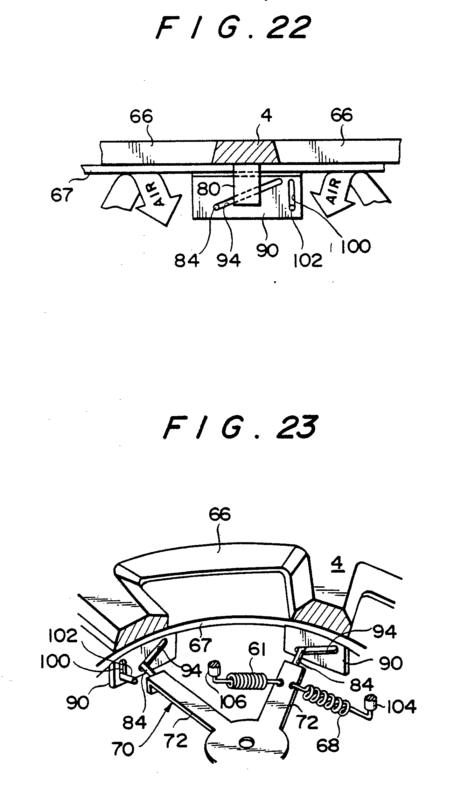

Figures 20 to 25 show a seventh embodiment of the invention, which is operationally similar to the sixth embodiment. The wheel cover 4 has a plurality of ventilation openings 66 in a circumferential direction closer the centre of the wheel cover 4 as shown in Figure 20. As shown in Figure 21, a spoke member 70 having a plurality of radially extending arms 72 is rotatably suported on the bottom surface of the wheel cover 4 by a pin 82. Each of the arms 72 has a bent end 74, from which a rod 84 projects outwardly in a radial direction.

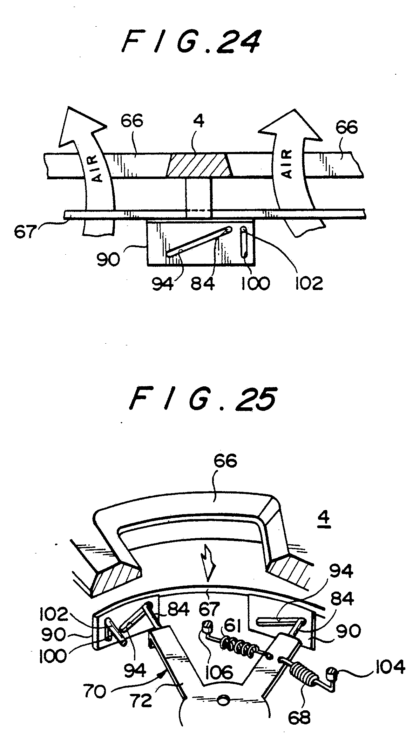

A single closing plate 67, which is formed into a ring, is provided to open or close the plurality of openings 66. The ring-shaped closing plate 67 has a plurality of cam plates 90 at the inner peripheral edge thereof facing towards the centre of the spoke member 70. Each of the cam plates 90 has a diagonal cam hole 94, through which each of the rods 84 from the spoke member 70 is inserted. The positional relationship between the rod 84 and the cam hole 94 is similar to the previous embodiment, such that when the rod 84 is at the lowermost end of the cam hole 94 as shown in Figures 22 and 23, the closing plate 67 is raised so as to close all the openings 66, and when the rod 84 is at the uppermost end of the cam hole 94 as shown in Figures 24 and 25, the closing plate 67 is lowered so as to open all the openings 66.

As shown in Figure 21, a coil spring 61 is interposed between one of the arms 72 of the spoke member 70 and the bottom surface of the wheel cover 4. A heat sensing member 68 in the shape of a coil, as used in the aforementioned embodiments, is also interposed between the same one of the arms 72 and the bottom surface of the wheel cover 4. Projections 104 and 106 from the bottom surface of the wheel cover 4 hold one end of the heat sensing member 68 and coil spring 61, respectively. The relative function between the heat sensing member 68 and coil spring 61 is the same as that of the previous embodiment.

One of the cam plates 90 is also provided with a guide hole 100 extending vertically with respect to the face of the closing plate 67. Inserted through the guide hole 100 is a guide bar 102, which projects outwardly in a radial direction from a base member 92 fixed on the bottom surface of the wheel cover 4, so that the closing plate 67 is prevented from any rotation while allowed to move axially.

Support projections 80 extend downwardly from the bottom surface of the wheel cover 4. Three of the support projections 80 are provided so as to keep the closing plate 67 at a predetermined position and guide the vertical movement of the closing plate 67.

In operation, when the temperature inside the wheel cover 4 is at the low temperature phase, the coil spring 61 pulls and rotates the spoke member 70 so as to place the rod 84 at the lowermost end of the cam hole 94, the left-hand end thereof, as shown in Figures 22 and 23, so that the closing plate 67 is raised and closes the openings 66. The air inside the wheel cover 4 will not be discharged as shown in Figure 22. When the temperature inside the wheel cover 4 is at the high temperature phase, the heat sensing member 68 takes the memorized shortened shape to pull and rotate the spoke member 70 in the opposite direction, overcoming a resilient force of the coil spring 61. As a result, the rod 84 is moved into the uppermost end of the cam hole 94, the right-hand end thereof as shown in Figures 24 and 25, so that the closing plate 67 is lowered to open the openings 66. Accordingly, heated air will be discharged through the openings 66.

## Claims

1. An apparatus for covering a disc wheel supporting a tyre for a motor vehicle having a wheel cover (4) mounted on the disc wheel and covering an outer side of said disc wheel and at least one ventilation opening (6, 16, 26, 36, 46, 56, 66) in the wheel cover for providing communication of the inside of the wheel cover with the atmosphere, characterised in that the ventilation opening is provided with means (7, 8, 17, 27, 31, 37, 38, 41, 47, 48, 51, 57, 58, 61, 67, 68) for closing the ventilation opening when the temperature inside the wheel cover is not more than a predetermined temperature and for opening the ventilation opening when the temperature inside the wheel cover is more than said predetermined temperature.

2. An apparatus for covering a disc wheel as claimed in Claim 1, wherein the closing means comprises a closing plate (7, 17, 27, 37, 47, 57, 67) for closing the ventilation opening, and heat sensing means (8, 38, 48, 58, 68) connected to the closing plate for deformation when the temperature inside the wheel cover is more than said predetermined temperature so as to displace said closing plate away from the ventilation opening and thereby open the ventilation opening.

3. An apparatus for covering a disc wheel as claimed in Claim 2, wherein the heat sensing means (38) comprises a shape memory effect alloy, which takes a first memorized shape at a temperature not more than said predetermined temperature so as to displace the closing plate toward the ventilation opening to close the ventilation opening, and takes a second memorized shape at a temperature more than said predetermined temperature so as to displace the closing plate away from the ventilation opening to open the ventilation opening.

4. An apparatus for covering a disc wheel as claimed in Claim 2, wherein the heat sensing means (48, 58, 68) comprises a shape memory effect alloy, which takes one memorized deformed shape at a temperature more than said predetermined temperature so as to displace said closing plate away from said ventilation opening to open said ventilation opening.

5. An apparatus for covering a disc wheel as claimed in Claim 4, further comprising a return spring (41, 51, 61) connected to said heat sensing means, which return spring urges the heat sensing means to return to its original shape at a temperature not more than said predetermined temperature so as to displace the closing plate towards the ventilation opening and close the ventilation opening.

6. An apparatus for covering a disc wheel as claimed in Claim 2, wherein said heat sensing means (8) is a bimetallic device.

7. An apparatus for covering a disc wheel as claimed in Claim 1, wherein said closing means comprises a closing plate (37) slidably mounted on the wheel cover so that a sliding movement of the closing plate closes or opens the ventilation opening, and a coiled heat sensing member (38) interposed between the wheel cover and the closing plate, which heat sensing member is made of a shape memory effect alloy, so that the heat sensing member takes a first memorized length at a temperature more than said predetermined temperature so as to slide said closing plate away from said opening and takes a second memorized length at a temperature not more than said predetermined temperature so as to slide said closing plate toward said opening.

8. An apparatus for covering a disc wheel as claimed in Claim 1, wherein the closing means comprises a closing plate (37) slidably mounted on the wheel cover so that a sliding movement of the closing plate closes or opens the ventilation opening, a coiled heat sensing member (38) interposed between the wheel cover and the closing plate, which heat sensing member is made of a shape memory effect alloy, so that said heat sensing member takes one memorized length at a temperature more than said predetermined temperature so as to slide said closing plate away from said opening, and a coil spring (31) interposed between the wheel cover and the closing plate and urging the closing plate towards the opening, so that the closing plate slides to close the opening by an urging force of the coil spring at a temperature not more than said predetermined temperature.

9. An apparatus for covering a disc wheel as claimed in Claim 1, wherein said closing means comprises a plurality of closing plates (47) across a ventilation opening and rotatably journaled by a plurality of first axes (22) on a periphery of the ventilation opening, which closing plates close the opening when the closing plates are aligned and flat, and opens the opening when said closing plates are rotated to be perpendicular to the wheel cover, a link bar (29) extending and movable along one side of the opening, said link bar being connected to each of the closing plates by second axes (24) separate from said first axes, so that the closing plates are rotated about the first axes when the link bar moves along said one side of the opening, a coiled heat sensing member (48) interposed between the wheel cover and the link bar, which heat sensing member is made of a shape memory effect alloy, so that said heat sensing member takes one memorized length at a temperature more than said predetermined temperature so as to move the link bar and rotate the closing plates to be perpendicular to the wheel cover, and a coil spring (41) interposed between the wheel cover and the link bar and urging the link bar against a moving force of the heat sensing member, so that the link bar is moved against the moving force of the heat sensing member by an urging force of the coil spring at a temperature not more than said predetermined temperature so as to rotate the closing plates to be aligned flat.

10. An apparatus for covering a disc wheel as claimed in Claim 1, wherein the closing means comprises a closing plate (57, 67) for closing the ventilation opening, a cam plate (44, 90) fixed to the closing plate and having a guide (53, 94) extending diagonally with respect to the closing plate, a cam driving member (32, 43, 70, 84) supported on the wheel cover and movable in a direction parallel to said wheel cover and coupled into the guide of the cam plate, whereby the closing plate together with the cam plate is displaced to open the opening as the cam driving member moves, a coiled heat sensing member (58, 68) interposed between the wheel cover and the cam driving member, the heat sensing member being made of a shape memory effect alloy, so that the heat sensing member takes one memorized length at a temperature more than said predetermined temperature so as to move the cam driving member in a direction to displace the closing plate to open the openings, and a coiled spring (51, 61) interposed between the wheel cover and the cam driving member and urging the cam driving member against a moving force of the heat sensing member, so that the cam driving member is moved against the moving force of the heat sensing member by an urging force of the coil spring at a temperature not more than said predetermined temperature so as to displace the closing plate to close the opening.

11. An apparatus for covering a disc wheel as claimed in Claim 10, wherein the cam driving member comprises a disc rotor (32, 70, 72) rotatably supported at a centre of said wheel cover, which disc rotor is connected with the heat sensing member and the coil spring, and a cam driving rod (43, 84) extending outwardly in a radial direction and coupled into the guide of the cam plate.

12. An apparatus for covering a disc wheel as claimed in Claim 11, wherein the guide of the cam plate is a hole (53, 94) extending in the cam plate.

13. An apparatus for covering a disc wheel as claimed in Claim 11, wherein the closing plate (57) is provided for each of the at least one ventilation opening and is hinged on the wheel cover at a peripheral portion of each of the openings.

14. An apparatus for covering a disc wheel as claimed in Claim 11, wherein the closing plate (67) is formed into a ring-shape which is adapted to close the at least one ventilation opening disposed along a circumferential direction on said wheel cover, whereby the closing plate approaches the wheel cover to close the opening or moves away from said wheel cover to open the opening depending on the direction of movement of the cam driving rod.

15. An apparatus for covering a disc wheel as claimed in Claim 14, comprising a second guide (100) on the cam plate extending perpendicular to the closing plate, and a guide rod (102) fixed on the wheel cover and coupled into the second guide, whereby an approaching or retracting movement of the closing plate is guided by the second guide and the guide rod.

**Patentansprüche**

1. Vorrichtung zur Abdeckung eines Scheibenrades, das einen Reifen für ein Kraftfahrzeug trägt, mit einer Radabdeckung (4), die auf dem Scheibenrad angebracht ist und eine Außenseite des Scheibenrades abdeckt, und mindestens einer Lüftungsöffnung (6, 16, 26, 36, 46, 56, 66) in der Radabdeckung, um eine Verbindung der Innenseite der Radabdeckung mit der Umgebungsluft herzustellen, dadurch gekennzeichnet, daß die Lüftungsöffnung eine Schließeinrichtung (7, 8, 17, 27, 31, 37, 38, 41, 47, 48, 51, 57, 58, 61, 67, 68) aufweist, welche die Lüftungsöffnung schließt, wenn die Temperatur innerhalb der Radabdeckung eine vorbestimmte Temperatur nicht übersteigt, und welche die Lüftungsöffnung öffnet, wenn die Temperatur innerhalb der Radabdeckung die vorbestimmte Temperatur übersteigt.

2. Vorrichtung zur Abdeckung eines Scheibenrades nach Anspruch 1, worin die Schließeinrichtung eine Schließplatte (7, 17, 27, 37, 47, 57, 67) zum Schließen der Lüftungsöffnung und eine Wärmefühler-Einrichtung (8, 38, 48, 58, 68) aufweist, welche mit der Schließplatte verbunden ist und sich verformt, wenn die Temperatur innerhalb der Radabdeckung die vorbestimmte Temperatur übersteigt, um die Schließplatte von der Lüftungsöffnung weg zu verschieben und dabei die Lüftungsöffnung zu öffnen.

3. Vorrichtung zur Abdeckung eines Scheibenrades nach Anspruch 2, worin die Wärmefühler-Einrichtung (38) eine Gedächtniseffekt-Legierung aufweist, die eine erste Gedächtnis-Form bei einer Temperatur annimmt, welche die vorbestimmte Temperatur nicht übersteigt, um die Schließplatte in Richtung auf die Lüftungsöffnung zu verschieben, um die Lüftungsöffnung zu verschließen, und die eine zweite Gedächtnis-Form bei einer Temperatur annimmt, welche die vorbestimmte Temperatur überschreitet, um die Schließplatte von der Lüftungsöffnung weg zu verschieben, um die Lüftungsöffnung zu öffnen.

4. Vorrichtung zur Abdeckung eines Scheibenrades nach Anspruch 2, worin die Wärmefühler-Einrichtung (48, 58, 68) eine Gedächtniseffekt-Legierung aufweist, die eine verformte Gedächtnis-Form bei einer Temperatur annimmt, welche die vorbestimmte Temperatur übersteigt, und die Schließplatte zur Öffnung der Lüftungsöffnung von der Lüftungsöffnung weg zu verschieben.

5. Vorrichtung zur Abdeckung eines Scheibenrades nach Anspruch 4, welche weiter eine Rückstellfeder (41, 51, 61) aufweist, die mit der Wärmefühler-Einrichtung verbunden ist, wobei die Rückstellfeder die Wärmefühler-Einrichtung dazu veranlaßt, bei einer Temperatur, welche die vorbestimmte Temperatur nicht übersteigt, in ihre ursprüngliche Form zurückzukehren, um die Schließplatte in Richtung auf die Lüftungsöffnung zu verschieben, und die Lüftungsöffnung zu schließen.

6. Vorrichtung zur Abdeckung eines Scheibenrades nach Anspruch 2, worin die Wärmefühler-Einrichtung (8) eine bimetallische Einrichtung ist.

7. Vorrichtung zur Abdeckung eines Scheibenrades nach Anspruch 1, worin die Schließeinrichtung eine Schließplatte (37), die verschiebbar an der Radabdeckung angebracht ist, so daß eine Verschiebungsbewegung der Schließplatte die Lüftungsöffnung schließt oder öffnet, und ein gewendeltes Wärmefühler-Organ (38) aufweist, das zwischen der Radabdeckung und der Schließplatte angeordnet ist, wobei das Wärmefühler-Organ aus einer Gedächtniseffekt-Legierung hergestellt ist, so daß das Wärmefühler-Organ eine erste Gedächtnis-Länge bei einer Temperatur annimmt, welche die vorbestimmte Temperatur übersteigt, um die Schließplatte von der Öffnung weg zu verschieben und eine zweite Gedächtnis-Länge bei einer Temperatur annimmt, welche die vorbestimmte Temperatur nicht übersteigt, um die Schließplatte in Richtung auf die Öffnung zu verschieben.

8. Vorrichtung zur Abdeckung eines Scheibenrades nach Anspruch 1, worin die Schließeinrichtung eine Schließplatte (37), die verschiebbar an der Radabdeckung angebracht ist, so daß eine Verschiebungs bewegung der Schließplatte die Lüftungsöffnung schließt oder öffnet, ein gewendeltes Wärmefühler-Organ (38), das zwischen der Radabdeckung und der Schließplatte angeordnet ist, wobei das Wärmefühler-Organ aus einer Gedächtniseffekt-Legierung hergestellt ist, so daß das Wärmefühler-Organ eine Gedächtnis-Länge bei einer Temperatur annimmt, welche die vorbestimmte Temperatur übersteigt, um die Schließplatte von der Öffnung weg zu verschieben, und eine Schraubenfeder (31) aufweist, die zwischen der Radabdeckung und der Schließplatte angeordnet ist und die Schließplatte in Richtung zur Öffnung hin drückt, so daß sich die Schließplatte bei einer Temperatur, welche die vorbestimmte Temperatur nicht übersteigt, durch eine Druckkraft der Schraubenfeder derart verschiebt, daß sie die Öffnung schließt.

9. Vorrichtung zur Abdeckung eines Scheibenrades nach Anspruch 1, worin die Schließeinrichtung eine Mehrzahl von Schließplatten (47), die quer über einer Lüftungsöffnung angeordnet und um eine Mehrzahl von ersten Achsen (22) drehbar an einem Umfang der Lüftungsöffnung angelenkt sind, wobei die Schließplatten die Öffnung schließen, wenn die Schließplatten ausgerichtet und flach angeordnet sind, und die Öffnung öffnen, wenn die Schließplatten derart gedreht werden, daß sie senkrecht zur Radabdeckung angeordnet sind, einen Verbindungsstab (29), der sich längs einer Seite der Öffnung erstreckt und längs dieser verschiebbar ist, wobei der Verbindungsstab über von den ersten Achsen verschiedene zweite Achsen (24) mit jeder der Schließplatten verbunden ist, so daß die Schließplatten um die ersten Achsen gedreht werden, wenn sich der Verbindungsstab längs der einen Seite der Öffnung verschiebt, ein gewendeltes Wärmefühler-Organ (48), das zwischen der Radabdeckung und dem Verbindungsstab angeordnet ist, wobei das Wärmefühler-Organ aus einer Gedächtniseffekt-Legierung hergestellt ist, so daß das Wärmefühler-Organ eine Gedächtnis-Länge bei einer Temperatur annimmt, welche die vorbestimmte Temperatur übersteigt, um den Verbindungsstab zu verschieben und die Schließplatten derart zu drehen, daß sie senkrecht zur Radabdeckung angeordnet sind, und eine Schraubenfeder (41) aufweist, die zwischen der Radabdeckung und dem Verbindungsstab angeordnet ist und den Verbindungsstab entgegen einer Verschiebekraft des Wärmefühler-Organs drückt, so daß der Verbindungsstab bei einer Temperatur, welche die vorbestimmte Temperatur nicht übersteigt, durch eine Druckkraft der Schraubenfeder derart gegen die Verschiebekraft des Wärmefühler-Organs verschoben wird, daß die Schließplatten in ihre flache Ausrichtung gedreht werden.

10. Vorrichtung zur Abdeckung eines Scheibenrades nach Anspruch 1, worin die Schließeinrichtung eine Schließplatte (57, 67) zum Schließen der Lüftungsöffnung, eine Kurvenführungsplatte (44, 90), die an der Schließplatte befestigt und mit einer Führung (53, 94) versehen ist, welche sich schräg in bezug auf die Schließplatte erstreckt, ein Kurvenführungs-Antriebsorgan (32, 43, 70, 84), das auf der Radabdeckung getragen wird und parallel zur Radabdeckung verschiebbar ist und in die Führung der Kurvenführungsplatte eingreift, wodurch die Schließplatte zusammen mit der Kurvenführungsplatte derart verschoben wird, daß die Öffnung geöffnet wird, Wenn sich das Kurvenführungs-Antriebsorgan verschiebt, ein gewendeltes Wärmefühler-Organ (58, 68), das zwischen der Radabdeckung und dem Kurvenführungs-Antriebsorgan angeordnet ist, wobei das Wärmefühler-Organ aus einer Gedächtniseffekt-Legierung hergestellt ist, so daß das Wärmefühler-Organ eine Gedächtnis-Länge bei einer Temperatur annimmt, welche die vorbestimmte Temperatur übersteigt, so daß das Kurvenführungs-Antriebsorgan in eine Richtung verschoben wird, um die Schließplatte derart zu verschieben, daß die Öffnungen geöffnet werden, und eine Schraubenfeder (51, 61) aufweist, die zwischen der Radabdeckung und dem Kurvenführungs-Antriebsorgan angeordnet ist und das Kurvenführungs-Antriebsorgan entgegen einer Verschiebekraft des Wärmefühler-Organs drückt, so daß das Kurvenführungs-Antriebsorgan bei einer Temperatur, welche die vorbestimmte Temperatur nicht übersteigt, durch eine Druckkraft der Schraubenfeder gegen die Verschiebekraft des Wärmefühler-Organs verschoben wird, so daß die Schließplatte derart verschoben wird, daß sie die Öffnung schließt.

11. Vorrichtung zur Abdeckung eines Scheibenrades nach Anspruch 10, worin das Kurvenführungs-Antriebsorgan einen Scheibenrotor (32, 70, 72), welcher in der Mitte der Radabdeckung drehbar gelagert ist, wobei der Scheibenrotor mit dem Wärmefühler-Organ und der Schraubenfeder verbunden ist, und einen Kurvenführungs-Antriebsstab (43, 84) aufweist, der sich in radialer Richtung nach außen erstreckt und in die Führung der Kurvenführungsplatte eingreift.

12. Vorrichtung zur Abdeckung eines Scheibenrades nach Anspruch 11, worin die Führung der Kurvenführungsplatte ein Durchbruch (53, 94) ist, der sich in der Kurvenführungsplatte erstreckt.

13. Vorrichtung zur Abdeckung eines Scheibenrades nach Anspruch 11, worin die Schließplatte (57) für jede der mindestens einen Lüftungsöffnung vorgesehen und mit der Radabdeckung an einem Umfangsteil jeder der Öffnungen gelenkig verbunden ist.

14. Vorrichtung zur Abdeckung eines Scheibenrades nach Anspruch 11, worin die Schließplatte (67) in einer Ringform ausgebildet ist, welche geeignet ist, die mindestens eine Lüftungsöffnung zu schließen, welche längs einer Umfangsrichtung auf der Radabdeckung angeordnet ist, wodurch sich die Schließplatte, abhängig von der Verschiebungsrichtung des Kurvenführungs-Antriebsstabes, der Radabdeckung nähert, um die Öffnungen zu schließen, oder sich von der Radabdeckung entfernt, um die Öffnungen zu öffnen.

15. Vorrichtung zur Abdeckung eines Scheibenrades nach Anspruch 14, mit einer zweiten Führung (100) auf der Kurvenführungsplatte, die sich senkrecht zur Schließplatte erstreckt, und einem Führungsstab (102), der auf der Radabdeckung befestigt ist und in die zweite Führung eingreift, wodurch eine annähernde oder zurückweichende Verschiebung der Schließplatte durch die zweite Führung und den Führungsstab geführt wird. ˙

**Revendications**

1. Enjoliveur pour recouvrir une roue à toile pleine supportant un pneumatique de véhicule à moteur comportant un disque d'enjoliveur (4) monté sur la roue à toile pleine et recouvrant le côté extérieur de celle-ci et au moins une ouverture de ventilation (6, 16, 26, 36, 46, 56, 66) ménagée dans le disque d'enjoliveur pour faire communiquer l'intérieur du disque d'enjoliveur avec l'atmosphère, caractérisé en ce que l'ouverture de ventilation est munie d'un moyen (7, 8, 17, 27, 31, 37, 38, 41, 47, 48, 51, 57, 58, 61, 67, 68) propre à la fermer quand la température régnant à l'intérieur du disque d'enjoliveur ne dépasse pas une valeur déterminée et à l'ouvrir quand la température régnant à l'intérieur du disque d'enjoliveur est supérieure à ladite valeur déterminée.

2. Enjoliveur pour recouvrir une roue à toile pleine selon la revendication 1, dans lequel le moyen de fermeture comprend une plaque de fermeture (7, 17, 27, 37, 47, 57, 67) pour fermer l'ouverture de ventilation, et un moyen de détection de chaleur (8, 38, 48, 58, 68) relié à la plaque de fermeture pour se déformer quand la température régnant à l'intérieur du disque d'enjoliveur est supérieure à ladite valeur déterminée afin d'écarter ladite plaque de fermeture de l'ouverture de ventilateur et d'ouvrir par là l'ouverture de ventilation.

3. Enjoliveur pour recouvrir une roue à toile pleine selon la revendication 2, dans lequel le moyen détecteur de chaleur (38) est en un alliage doté de mémoire des formes, qui prend une première forme mémorisée à une température non supérieure à la dite valeur déterminée afin de déplacer la plaque de fermeture vers l'ouverture de ventilation pour fermer l'ouverture de ventilation, et prend une seconde forme mémorisée à une température supérieure à ladite valeur déterminée afin d'écarter la plaque de fermeture de l'ouverture de ventilation pour ouvrir l'ouverture de ventilation.

4. Enjoliveur pour recouvrir une roue à toile pleine selon la revendication 2, dans lequel le moyen de détection de chaleur (48, 58, 68) est en un alliage doté de mémoire des formes, qui prend une forme déformée mémorisée à une température supérieure à ladite valeur déterminée afin d'écarter ladite plaque de fermeture de ladite ouverture de ventilation pour ouvrir cette ouverture de ventilation.

5. Enjoliveur pour recouvrir une roue à toile pleine selon la revendication 4, comprenant encore un ressort de rappel (41, 51, 61) relié audit moyen de détection de chaleur, lequel ressort de rappel tend à faire reprendre au moyen de détection de chaleur sa forme initiale à une température non supérieure à ladite valeur déterminée afin de déplacer la plaque de fermeture vers l'ouverture de ventilation et de fermer l'ouverture de ventilation.

6. Enjoliveur pour recouvrir une roue à toile pleine selon la revendication 2, dans lequel ledit moyen de détection de chaleur (8) est un dispositif bimétallique.

7. Enjoliveur pour recouvrir une roue à toile pleine selon la revendication 1, dans lequel ledit moyen de fermeture comprend une plaque de fermeture (37) monté coulissante sur le disque d'enjoliveur de sorte qu'en se déplaçant à coulissement elle ferme ou ouvre l'ouverture de ventilation, et un élément de détection de chaleur enroulé (38) interposé entre le disque d'enjoliveur et la plaque de fermeture, lequel élément de détection de chaleur est en un alliage doté de mémoire des formes, de sorte que l'élément de détection de chaleur prend une première longueur mémorisée à une température supérieure à ladite valeur déterminée afin d'écarter à coulissement ladite plaque de fermeture de ladite ouverture et prend une seconde longueur mémorisée à une température non supérieure à ladite valeur déterminée afin de faire glisser ladite plaque de fermeture vers ladite ouverture.

8. Enjoliveur pour recouvrir une roue à toile pleine selon la revendication 1, dans lequel le moyen de fermeture comprend une plaque de fermeture (37) montée coulissante sur le disque d'enjoliveur de sorte qu'en se déplaçant à coulissement elle ferme ou ouvre l'ouverture de ventilation, un élément de détection de chaleur enroulé (38) interposé entre le disque d'enjoliveur et la plaque de fermeture, lequel élément de détection de chaleur est en un alliage doté de mémoire des formes, de sorte que ledit élément de détection de chaleur prend une longueur mémorisée à une température supérieure à ladite valeur déterminée afin d'écarter à coulissement ladite plaque de fermeture de ladite ouverture, et un ressort à boudin (31) interposé entre le disque d'enjoliveur et la plaque de fermeture et sollicitant la plaque de fermeture vers l'ouverture, de sorte que la plaque de fermeture glisse pour fermer l'ouverture sous la sollicitation du ressort à boudin à une température non supérieure à ladite valeur déterminée.

9. Enjoliveur pour recouvrir une roue à toile pleine selon la revendication 1, dans lequel ledit moyen de fermeture comprend une série de plaques de fermeture (47) situées en travers d'une ouverture de ventilation et tourillonnant au moyen d'une série de premiers axes (22) sur le pourtour de l'ouverture de ventilation, lesquelles plaques de fermeture ferment l'ouverture lorsqu'elles sont alignées à plat, et ouvrent l'ouverture quand elles pivotent pour être perpendiculaires au disque d'enjoliveur, une barrette de liaison (29) s'étendant et pouvant se déplacer le long d'un côté de l'ouverture, cette barre de liaison étant reliée à chacune des plaques de fermeture par de seconds axes (24) distincts desdits premiers axes, de sorte que les plaques de fermeture pivotent autour des premiers axes quand la barrette de liaison se déplace le long dudit côté de l'ouverture, un élément de détection de chaleur enroulé (48) interposé entre le disque d'enjoliveur et la barrette de liaison, lequel élément de détection de chaleur est en un alliage doté de mémoire des formes, de sorte qu'il prend une longueur mémorisée à une température supérieure à ladite valeur déterminée afin de déplacer la barrette de liaison et de faire pivoter les plaques de fermeture pour les amener perpendiculairement au disque d'enjoliveur, et un ressort à boudin (41) interposé entre le disque d'enjoliveur et la barrette de liaison et sollicitant la barrette de liaison à l'encontre d'une force de déplacement de l'élément de détection de chaleur, de sorte que la barrette de liaison est déplacée à l'encontre de la force de déplacement de l'élément de détection de chaleur par la sollicitation du ressort à boudin à une température non supérieure à ladite température déterminée afin de faire pivoter les plaques de fermeture pour les aligner à plat.

10. Enjoliveur pour recouvrir une roue à toile pleine selon la revendication 1, dans lequel le moyen de fermeture comprend une plaque de fermeture (57, 67) pour fermer l'ouverture de ventilation, une came plate (44, 90) fixée à la plaque de fermeture et comportant un guide (53, 94) s'étendant en biais par rapport à la plaque de fermeture, un élément d'entraînement de came (32, 43, 70, 84) supporté sur le disque d'enjoliveur et mobile parallèlement à celui-ci et relié à l'intérieur du guide de la came plate, de sorte que la plaque de fermeture se déplace conjointement avec la came plate pour ouvrir l'ouverture quand l'élément d'entraînement de came se déplace, un élément de détection de chaleur enroulé (58, 68) interposé entre le disque d'enjoliveur et l'élément d'entraînement de came, l'élément de détection de chaleur étant en un alliage doté de mémoire des formes, de sorte qu'il prend une longueur mémorisée à une température supérieure à ladite valeur déterminée afin de déplacer l'élément d'entraînement de came dans le sens voulu pour déplacer la plaque de fermeture en sorte qu'elle ouvre les ouvertures, et un ressort à boudin (51, 61) interposé entre le disque d'enjoliveur et l'élément d'entraînement de came et sollicitant l'élément d'entraînement de came à l'encontre de la force de déplacement de l'élément de détection de chaleur, de sorte que l'élément d'entraînement de came est déplacé à l'encontre de la force de déplacement de l'élément de détection de chaleur par la sollicitation du ressort à boudin à une température non supérieure à ladite valeur déterminée afin de déplacer la plaque de fermeture pour fermer l'ouverture.

11. Enjoliveur pour recouvrir une roue à toile pleine selon la revendication 10, dans lequel l'élément d'entraînement de came comprend un rotor-disque (32, 70, 72) monté tourillonnant au centre dudit disque d'enjoliveur, lequel disque-rotor est relié à l'élément de détection de chaleur et au ressort à boudin, et une tige d'entraînement de came (43, 84) s'étendant vers l'extérieur radialement et reliée à l'intérieur du guide de la came plate.

12. Enjoliveur pour recouvrir une roue à toile pleine selon la revendication 11, dans lequel le guide de la came plate est un trou (53, 94) s'étendant dans la came plate.

13. Enjoliveur pour recouvrir une roue à toile pleine selon la revendication 11, dans lequel la plaque de fermeture (57) est prévue pour la ou chaque ouverture de ventilation et est articulée sur le disque d'enjoliveur à la partie périphérique de chacune des ouvertures.

14. Enjoliveur pour recouvrir une roue à toile pleine selon la revendication 11, dans lequel la plaque de fermeture (67) est façonnée sous une forme annulaire voulue pour fermer la ou chaque ouverture de ventilation ménagée suivant une direction circonférentielle dans ledit disque d'enjoliveur, de sorte que la plaque de fermeture se rapproche du disque d'enjoliveur pour fermer l'ouverture ou s'écarte dudit disque d'enjoliveur pour ouvrir l'ouverture selon le sens de déplacement de la tige d'entraînement de came.

15. Enjoliveur pour recouvrir une roue à toile pleine selon la revendication 14, comprenant un second guide (100) s'étendant sur la came plate perpendiculairement à la plaque de fermeture, et une tige de guidage (102) fixée sur le disque d'enjoliveur et reliée à l'intérieur du second guide, de sorte que le déplacement d'approche ou de rétraction de la plaque de fermeture est guidé par le second guide et par la tige de guidage.

# F I G . 1

# F I G . 2

# F I G . 3

# F I G . 4

# F I G. 5

# F I G. 7

# F I G. 8

# F I G . 6

# F I G . 9

F I G . 10

F I G . 11

# F I G . 12

4

46 — 23

22

47

22 24 25

23

29

48

20

# F I G . 13

22 22 23a 23a 22 23a
22 23a 47 47 47 47 46 4

23

24 29 24 23b 23 24 48 23b 41 21

23b 24 20

# F I G . 14

# F I G . 15

# F I G . 16

# F I G . 17

# F I G . 18

# F I G . 19

10

# F I G. 20

# F I G. 21

## F I G . 22

## F I G . 23

# F I G . 24

# F I G . 25